Europäisches Patentamt

European Patent Office

Office européen des brevets

(19)

(11) EP 0 886 568 B1

(12) FASCICULE DE BREVET EUROPEEN

(45) Date de publication et mention
de la délivrance du brevet:
**14.06.2000 Bulletin 2000/24**

(51) Int Cl.⁷: **B28B 7/38**, C04B 41/64

(21) Numéro de dépôt: **97914372.4**

(86) Numéro de dépôt international:
**PCT/FR97/00432**

(22) Date de dépôt: **12.03.1997**

(87) Numéro de publication internationale:
**WO 97/34749 (25.09.1997 Gazette 1997/41)**

(54) **PROCEDE DE MOULAGE ET D'HYDROFUGATION D'ELEMENTS MOULES EN BETON, MORTIER, CIMENT, PAR UNE RESINE SILICONE**

VERFAHREN ZUM FORMEN UND HYDROPHOBIEREN VON BETON-, MÖRTEL-, ZEMENTFORMKÖRPERN MIT EINEM SILICONHARZ

PROCESS FOR CASTING AND WATERPROOFING OF ELEMENTS CAST IN CONCRETE, MORTAR, CEMENT, BY USING A SILICONE RESIN

(84) Etats contractants désignés:
**AT BE CH DE DK ES FI FR GB GR IE IT LI LU NL PT SE**

(30) Priorité: **15.03.1996 FR 9603551**

(43) Date de publication de la demande:
**30.12.1998 Bulletin 1998/53**

(73) Titulaire: **RHODIA CHIMIE**
**92408 Courbevoie Cédex (FR)**

(72) Inventeurs:
• **GARCIN, Eric**
**F-92200 Neuilly (FR)**
• **GOUBET, Sandrine**
**F-69008 Lyon (FR)**

(74) Mandataire: **Trolliet, Maurice**
**RHODIA SERVICES**
**Direction de la Propriété Industrielle**
**CRIT-Carrières - BP 62**
**69192 Saint-Fons Cédex (FR)**

(56) Documents cités:
EP-A- 0 275 378          EP-A- 0 359 676
FR-A- 1 475 709          FR-A- 2 231 488
FR-A- 2 474 518          US-A- 2 810 704
US-A- 3 983 265

• DATABASE WPI Section Ch, Week 9301 Derwent Publications Ltd., London, GB; Class A25, AN 93-004590 XP002019491 & JP 04 332 605 A (KAO CORP) , 19 Novembre 1992

**Description**

La présente invention a trait à un procédé de moulage et d'hydrofugation de matériaux de construction tels que éléments moulés en béton, en mortier, en ciment, ou en terre cuite, par exemple tuiles, briques. Elle a aussi pour objet les objets moulés ainsi obtenus ainsi que des compositions de démoulage et d'hydrofugation.

Les constructions modernes font très souvent appel à des éléments moulés en béton ou en mortier. Ces éléments peuvent être moulés sur site ou préfabriqués dans des usines spécialisées, avec ou sans étuvage de la pièce pour en accélérer le séchage.

Afin de faciliter le démoulage et minimiser les défauts que peuvent comporter ces pièces, les moules sont généralement badigeonnés d'agent dit de démoulage. Un bon démoulage est particulièrement important car il évite le coût de reprise des défauts, coût qui peut atteindre jusqu'à 15 % du coût du gros oeuvre. Les agents de démoulage sont en général des huiles minérales, tandis que les moules sont réalisés le plus souvent en acier, en bois ou en matière plastique. Les résines silicones sont rarement utilisées en raison de leur coût élevé.

Une fois mises en place, notamment lorsqu'elles constituent des façades de construction, ces pièces sont généralement protégées des dégâts créés par l'humidité (pluie, brouilld, etc.) par un traitement hydrofuge. Cette hydrofugation est onéreuse en raison du coût de main-d'oeuvre et du coût d'échaffaudage.

On a déjà proposé par le passé des compositions données comme facilitant le démoulage et en même temps hydrofugeant les pièces ainsi moulées. Il s'agit de la demande de brevet FR-A-2 231 488 qui propose d'appliquer sur les surfaces des moules un mélange constitué par des composés organosiliciques durcissables, hydrofuges, des matières minérales solides finement divisées ainsi que, éventuellement, des solvants. La reproduction des exemples de cette demande a permis d'obtenir une hydrofugation satisfaisante du produit moulé mais n'a pas permis d'obtenir un bon démoulage, la surface de la pièce moulée présentant des cratères ainsi que de nombreuses tâches blanchâtres.

D'après la demande de brevet FR-A-2 474 518, on connaît également une composition à base de résines silicones, réticulables à la température ambiante en présence d'humidité, permettant d'obtenir un film repoussant l'eau, anti-adhérent, facile à décoller et résistant à la salissure. Cette composition peut être utilisée dans un grand nombre d'applications, par exemple comme agent de revêtement pour le décollement ou le démoulage ou comme agent de revêtement de la surface de matériaux à protéger de la lumière, de l'air, de l'eau, etc. Elle peut notamment être appliquée sur du ciment, du béton, de la brique, de la tuile et de l'ardoise ainsi que sur les constructions telles que les ponts et les bâtiments. Ce document ne prévoit toutefois pas le démoulage et l'hydrofugation simultanés d'éléments de construction moulés.

En outre, s'agissant de l'application dont il est question dans la présente invention, la composition selon ce document n'est pas applicable à grande échelle pour des raisons de coût. En effet, cette composition complexe est constituée d'un mélange

a) d'une résine organopolysiloxane,
b) d'un $\alpha,\omega$-dihydroxydiorganopolysiloxane,
c) d'un réticulant à base d'un organosilane à fonction(s) hydrolysable(s) ou son produit d'hydrolyse et/ou de condensation partielle, qui sert à durcir la composition à la température ambiante.

En outre, un catalyseur de durcissement peut être également prévu.

La présente invention a pour objectif de fournir un nouveau procédé permettant simultanément le démoulage et l'hydrofugation d'éléments moulés en béton, mortier, ciment et analogue, qui permette à la fois un démoulage parfait des éléments moulés ainsi que leur hydrofugation dans des conditions tout à fait satisfaisantes, tout en respectant les critères économiques qu'il est indispensable de respecter dans ce genre d'activité.

Plus précisemment, l'invention a pour objectif de rendre économiquement acceptable l'utilisation des résines silicones pour le démoulage des éléments de construction en proposant une composition simple assurant parfaitement à la fois le démoulage et l'hydrofugation.

Ces objectifs sont atteints conformément à l'invention par un procédé basé de façon très judicieuse sur la capacité du béton, mortier, ciment et analogue, par leur caractère alcalin, d'assurer eux-mêmes le durcissement de la résine silicone selon l'invention.

La présente invention a donc pour objet un procédé de moulage et d'hydrofugation simultanés d'éléments moulés en béton, mortier, ciment ou analogue, caractérisé en ce que, avant de couler le béton, mortier, ciment ou analogue, on recouvre l'intérieur du moule d'une composition comprenant une résine qui est un copolymère silicone de formule (I) suivante :

$$M_\alpha D_\beta T_\gamma Q_{\delta(}OR)_\varepsilon \qquad (I)$$

où :

- $M = R^1R^2R^3SiO1/2$
  $D = R^4R^5SiO2/2$
  $T = R^6SiO3/2$
  $Q = SiO4/2$
- $R^1$, $R^2$, $R^3$, $R^4$, $R^5$ et $R^6$, identiques ou différents entre eux, représentent chacun un reste hydrocarboné en $C_1$-$C_{12}$ et plus particulièrement en $C_1$-$C_8$ ;
- R : atome d'hydrogène ou radical alkyle linéaire ou ramifié, en $C_1$-$C_4$ ;
- le copolymère présente dans sa structure au moins un motif T ou Q ;
- les symboles $\alpha$, $\beta$, $\gamma$, $\delta$ représentent les fractions molaires (ou la proportion en nombre) des atomes de silicium respectivement de types M, D, T et Q pour un atome de silicium ; le symbole représente la fraction molaire (ou la proportion en nombre) des extrémités $\equiv$SiOR par atome de silicium ; ces symboles variant dans les intervalles suivants :

  $\alpha$ : 0-0,5
  $\beta$ : 0-0,95
  $\gamma$ : 0-0,9
  $\delta$ : 0-0,8
  $\varepsilon$ : 0,05 - 2

avec $\alpha + \beta + \gamma + \delta = 1$

en l'absence de réticulant de type silane hydrolysable et de catalyseur de durcissement dans la composition.

Les motifs M, quand il y en a plusieurs, peuvent être identiques ou différents entre eux ; la même remarque s'applique également aux motifs D et T.

Selon un mode de réalisation préféré de l'invention, la résine est un copolymère de formule (I) où :

- $R^1$ à $R^6$ :identiques ou différents entre eux, représentent chacun un radical alkyle, linéaire ou ramifié, en $C_1$-$C_8$ ;
- le copolymère présente dans sa structure au moins un motif T, le symbole $\gamma$ étant alors un nombre différent de zéro;
- au moins 25 % en nombre de l'un ou plusieurs des substituants $R^1$ à $R^6$ représentent un radical alkyle, linéaire ou ramifié, en $C_3$-$C_8$.

De manière plus préférée, le copolymère est de type:

$$D_\beta T_\gamma (OR)_\varepsilon$$

où :

- $R^4$ à $R^6$ identiques ou différents entre eux, représentent chacun un radical alkyle, linéaire ou ramifié, en $C_1$-$C_8$ ;
- au moins 25 % en nombre de l'un ou plusieurs des substituants $R^4$ à $R^6$ représentent un radical alkyle, linéaire ou ramifié, en $C_3$-$C_8$ ;
- $\beta$ : 0,2-0,9
  $\gamma$ : 0,1 - 0,8
  $\varepsilon$ : 0,2 - 1,5.

De manière encore plus préférée, le copolymère est de type:

$$D_\beta T_\gamma (OR)_\varepsilon$$

où :

- $R^4$ et $R^5$ identiques ou différents entre eux, représentent chacun un radical alkyle, linéaire ou ramifié, en $C_1$-$C_2$ ;
- $R^6$ identiques ou différents entre eux, représentent chacun un radical alkyle, linéaire ou ramifié, en $C_3$-$C_8$ ;
- R atome d'hydrogène ou alkyle linéaire en $C_1$-$C_3$ ;
- $\beta$ : 0,2-0,6
  $\gamma$ : 0,4 - 0,8

$\varepsilon$ : 0,3 -1,0.

De manière générale, chacun des radicaux $R^1$ à $R^6$ peut être un radical alkyle linéaire ou ramifié, par exemple méthyle, éthyle, propyle, butyle, isobutyle ; un radical alcényle comme par exemple vinyle ; un radical aryle, par exemple phényle ou naphtyle ; un radical arylalkyle comme par exemple benzyle ou phényléthyle, alkylaryle comme par exemple tolyle, xylyle ; ou un radical araryle comme le biphénylyle.

Le copolymère silicone selon l'invention se suffit à lui-même pour assurer simultanément le démoulage parfait et l'hydrofugation des éléments moulés. Il remplit les objectifs énoncés plus haut et évite un traitement d'hydrofugation subséquent.

Toutefois, on pourra lui ajouter un ou des modificateurs de la tension de surface afin d'améliorer si besoin est l'étalement de la composition sur le moule et la cohésion entre la résine et le béton. On pourra notamment lui adjoindre une ou des huiles polydiorganosiloxanes réactives ou non réactives, un ou plusieurs autres copolymères connus en soi, et/ou un ou plusieurs agents de démoulage classiques.

Conviennent bien, à titre d'huiles non réactives, les polydiméthylsiloxanes $\alpha,\omega$-triméthylsilyles de viscosité comprise entre 10 et 10 000 mPa.s, de préférence entre 50 et 5000 mPa.s, et, à titre d'huiles réactives, les polydiméthylsiloxanes $\alpha,\omega$-dihydroxylés ayant les mêmes viscosités que ci-dessus. Ces huiles pourront être présentes à raison de 1 à 80 %, notamment 1 à 60 %, de préférence de 40 à 60 % en poids par rapport à l'ensemble résine silicone (I) + huile.

Comme copolymères, on peut notamment citer des copolymères silicone-polyéther issus de la réaction d'un polyéther de formule :

$$CH_2=CH-CH_2-[OCH_2CH_2]_v-[OCH_2CH(CH_3)]_w-OH$$

sur une huile silicone de formule :

$$Me_3SiO(Me_2SiO)_x(MeHSiO)_ySiMe_3, Me = méthyle$$

avec v et w différents de 0 et notamment compris entre 5 et 30
avec x allant de 20 à 150
avec y allant de 2 à 10.

Le copolymère peut être additionné d'un additif tel qu'un polyéther libre, par exemple en proportion pondérale allant de 40/60 à 60/40, de préférence de l'ordre de 50/50.

Ces copolymères peuvent être présents à raison de 0,1 à 10 %, notamment de 0,5 à 5 %, de préférence de 0,5 à 2 % en poids par rapport à l'ensemble résine silicone (I) + copolymère.

On peut aussi ajouter à la résine un ou plusieurs agents de démoulage classiques qui vont permettre de diminuer la quantité de résine et donc le coût tout en assurant bien sûr les critères de démoulage, l'hydrofugation étant par ailleurs toujours assurée. Ces agents peuvent être présents à raison de 1 à 80 %, notamment de 1 à 60 %, de préférence de 40 à 60 % en poids par rapport à l'ensemble résine silicone (I) + agent de démoulage classique.

Sur le moule, on applique en général la composition selon l'invention à raison de 5 à 30 $g/m^2$, notamment de 15 à 25 $g/m^2$, de préférence de l'ordre de 20 $g/m^2$.

La résine polyorganosiloxane alcoxylée de départ peut être obtenue, de manière connue en soi, en faisant réagir des halogénoalkysilanes entre eux (par exemple cohydroalcoolyse de méthyl et de propyl chlorosilanes). En pratique, le milieu réactionnel de synthèse est aqueux. Il comprend de l'alcool, par exemple le méthanol pour obtenir R = méthyle, l'éthanol pour obtenir R = éthyle, etc.

La présente invention a encore pour objet les compositions de démoulage et d'hydrofugation simultanés qui comprennent au moins une résine qui est un copolymère de formule (I) tel que défini ci-dessus et au moins un modificateur de tension de surface, notamment choisi parmi le groupe des huiles réactives, des huiles non réactives, des copolymères et agents de démoulage décrits ci-dessus.

Elle concerne tout particulièrement une composition combinant les résines selon l'invention à au moins un agent de démoulage.

La présente invention va être maintenant décrite plus en détail et à l'aide de modes de réalisation donnés uniquement à titre d'exemples non limitatifs.

## EXEMPLE 1 :

## MODE DE PREPARATION D'UNE RESINE DTOR AVEC R = CH_3:

Mode réactionnel : cohydrométhanolyse de chlorosilanes.

Dans un réacteur de 25 litres, on charge 32,62 moles de diméthyldichlorosilane et 32,62 moles de propyltrichlorosilane. On coule un mélange méthanol-eau, soit 195,6 moles de méthanol et 21,77 moles d'eau en 3 heures et quinze minutes sous agitation. On maintient la température à 25°C. On porte à ébullition en fin de coulée et on maintient pendant 4 heures et trente minutes. On laisse ensuite décanter une heure et on élimine la phase supérieure, ce qui représente environ 6 % de la résine. On élimine les chlores résiduels en rajoutant du méthanol, successivement : 1,7 , 1,5 et 1,5 kg éliminés par distillation. On neutralise au bicarbonate de sodium 0,23 kg une demi-heure à 40°C. On obtient 4,9 kg et 4,4 kg après filtration.

Cette résine a une viscosité η à 25°C de 27,9 mPa.s et l'analyse RMN[29]Si révèle la distribution ci-après des différents motifs :

| Motifs | % molaire |
|---|---|
| D(OMe) | 0,25 |
| D(OMe)_2 | 7,70 |
| D | 36,21 |
| T(OMe)_3 | 0,18 |
| T(OMe)_2 | 6,04 |
| T(OMe) | 26,51 |
| T | 23,11 |
| MeOSi/Si = 0,548 mole/mole | 100,00 |

Quantité mise en oeuvre : 2728 g soit 7,37 moles.

On prépare de la même manière des résines DTOR avec R = alkyle linéaire en $C_1$-$C_8$, notamment $C_1$-$C_3$ et plus particulièrement $C_2H_5$, conformément aux modes de réalisation préférés de l'invention. Pour obtenir R = $C_2H_5$, on travaille avec de l'éthanol à la place du méthanol.

## EXEMPLE 2 :

## MODE DE PREPARATION D'UNE RESINE DT(OR) AVEC R = C2H5 :

Mode réactionnel : cohydrométhanolyse de chlorosilanes.

Dans un réacteur de 2 litres, on charge 3,5 moles de diméthyldichlorosilane et 3,5 moles de propyltrichlorosilane. On amène la température à 60°C, puis on coule un mélange éthanol/eau (6,12 moles d'éthanol - 6,6 moles d'eau) en 2 heures, sous agitation et chauffage à 80°C. On élimine ensuite l'éthanol acide par distillation 1 h 50 min à 120°C.

Ensuite, on élimine les chlores résiduels par lavage avec 166 g d'éthanol et 5,7 g d'eau (pour ajuster à la viscosité voulue), puis on distille 1 h 05 min à 120°C. On refroidit à 100°C et on neutralise au bicarbonate de sodium (11,1 g) à 100°C pendant 1h. On obtient 515 g de résine après refroidissement à 50°C et filtration.

Cette résine a une viscosité cinématique de 87,7 mm²/s à 25°C.

L'analyse RMN[29]Si révèle la distribution donnée ci-après des différents motifs :

| Motifs | % molaire relativement au Si |
|---|---|
| D(OR) | 2,60 |
| D | 37,10 |
| T(OR)_2 | 5,80 |
| T(OR) | 23,90 |
| T | 30,60 |

Nombre de motifs Si(OR) par atome de Si = 0,381

Formule de la résine DT(OR) :

$$D_{0,397}T_{0,603}(OR)_{0,381}$$

avec D = $(CH_3)_2SiO_{2/2}$ et T = $C_3H_7SiO_{3/2}$

Cette résine sera dénommée résine A dans la suite de la description.

## EXEMPLE 3 : ESSAIS.

### 1) Procédure de préparation du mortier

#### Appareillage

* Malaxeur LEROY-SOMER du type LS80L1 utilisé à sa vitesse maximale.
* Moule en acier inoxydable de dimensions 4x4x16 cm
* Spatule
* Pinceau

#### Produits

* 450 g de Ciment VICAT CPA 50
* 225 g d'eau
* un sachet de sable normalisé CEN

#### Méthode

Les moules sont préalablement badigeonnés au pinceau.

Introduire le ciment dans le bol du malaxeur, verser l'eau et mélanger immédiatement pendant 30 sec. Ajouter le sable et mélanger encore 1 min 30. Arrêter le malaxeur pendant 1 min, puis reprendre le malaxage pendant 2 min. Verser ensuite le mélange dans le moule, tasser, araser à l'aide d'une spatule.

Après 24 heures de séchage dans le moule, on démoule les éprouvettes qui sont mises à sécher 8 jours à 23°C et 65 % d'humidité.

### 2) Procédure de l'évaluation du pouvoir hydrofuge

Le pouvoir hydrofuge des différents produits est évalué par un test de reprise d'eau par capillarité à 23°C, atmosphère à 65 % d'humidité. La face inférieure des éprouvettes de béton est mise dans l'eau de manière que la surface inférieure soit immergée par 3 mm d'eau pendant 8 jours, à l'issue de quoi l'on détermine par pesée la quantité d'eau absorbée.

### 3) Evaluation du démoulage

Le démoulage est évalué en tenant compte de différents paramètres tels que la facilité du démoulage (force de cohésion du moule sur l'éprouvette), l'aspect des éprouvettes: bulles, taches.

Une note comprise entre 0 et 10 (10 = démoulage parfait : facile et éprouvette lisse et non tachée) est alors donnée à chaque essai.

### 4) Produits testés

- essai 1 : témoin non traité.
- essais 2 et 3 : agents de démoulage du commerce, vendus respectivement sous les dénominations Démoulux MSF® (essai 2) et Démoulux S3® (essai 3) par la société CIA, FRANCE.

- essais 4 et 5 : exemples 1 et 2 de la demande de brevet FR-A-2 231 488.
- essais selon l'invention :

    * essai 6 : résine A (préparée à l'exemple 2)
        Résine notée DTOR avec R = $C_2H_5$ ;
    * essai 7 : 50 % résine A + 50 % huile B
        huile B : huile polydiméthylsiloxane bloquée à chacune des extrémités des chaînes par des motifs triméthylsiloxyles, ayant une viscosité de 300 mPa.s à 25 C, ayant une $\overline{M}_n$ = 8 300 (elle comporte environ 110 motifs diméthylsiloxyles) ;
    * essai 8 : 50 % résine A + 50 % huile C
        huile C : $\alpha,\omega$-dihydroxypolydiméthylsiloxane, ayant une viscosité de 3 500 mPa.s à 25°C, ayant une $\overline{M}_n$ = 26150 (elle comporte environ 350 motifs diméthylsiloxyles), contenant 0,13 % en poids de groupements hydroxyles (soit 0,0076 motifs SiOH pour 100 g d'huile) ;
    * essai 9 : 99 % résine A + 1 % huile D
        huile D = mélange 50/50 en poids d'un polymère à blocs silicone-polyéther et de polyéther libre ; le polymère silicone-polyéther est issu de la réaction d'un polyéther de formule :

$$CH_2=CH-CH_2-[OCH_2CH_2]_v-[OCH_2CH(CH_3)]_w-OH$$

sur une huile silicone de formule :

$$Me_3SiO(Me_2SiO)_x(MeHSiO)_ySiMe_3, Me = méthyle$$

avec v = 22 (oxyde d'éthylène)
avec w = 24 (oxyde de propylène)
avec x = 73
avec y = 7.

## 5) Résultats

Les résultats sont rassemblés dans le tableau ci-dessous.

| Essais n° | Absorption d'eau après 8 jours | Démoulage / 10 |
|-----------|-------------------------------|----------------|
| 1 | 6,9 % | 5 |
| 2 | 6,7 % | 7 |
| 3 | 6,9 % | 9 |
| 4 | 1,46 % | 1 |
| 5 | 0,75 % | 0 |
| 6 | 0,67 % | 8 |
| 7 | 0,69 % | 8 |
| 8 | 0,63 % | 7 |
| 9 | 0,95% | 10 |

## 6) Conclusions

Des produits du commerce (essais 2 et 3) donnent un démoulage satisfaisant mais ne sont absolument pas hydrofuges.

Les produits revendiqués dans le brevet FR 2 231 488 (essais 4 et 5) donnent de bonnes propriétés hydrofuges mais sont de très mauvais agents de démoulage.

Les produits selon l'invention (essais 6 à 9) ont des propriétés démoulantes de bonne à très bonne et un pouvoir hydrofuge excellent.

**EXEMPLE 4 : Essai**

**1) Procédure de préparation du mortier**

**Appareillage**

*   Malaxeur EUROMACHINE du type M201 utilisé à la vitesse de 195 tr/min.
*   Moule en acier inoxydable de dimensions 40 x 25 x 5 cm

**Produits**

*   900 g de Ciment VICAT CPA 50
*   450 g d'eau
*   2 sachets de sable normalisé CEN

**Méthode**

Le produit est préalablement appliqué au chiffon sur le moule.
Introduire le ciment dans le bol du malaxeur, verser l'eau et mélanger immédiatement pendant 30 sec. Ajouter le sable et mélanger encore 1 min. Arrêter le malaxeur pendant 1 min 30, puis reprendre le malaxage pendant 1 min. Verser ensuite le mélange dans le moule, vibrer 2 min.
Après 24 heures de séchage dans le moule, on démoule les plaques qui sont mises à sécher 8 jours à atmosphère ambiante.

**2) Procédure de l'évaluation du pouvoir hydrofuge**

Le pouvoir hydrofuge des différents produits est évalué par un test de reprise d'eau à la pipe de KARSTEN, test réalisé selon les indications de la norme RILEM n° II.4 de 1978 (RILEM = Réunion Internationale des Laboratoires d'Essais et de Recherches sur les Matériaux et les Constructions). On mesure le volume d'eau absorbé par la plaque sur une durée de 4 heures.

**3) Evaluation du démoulage**

Le démoulage est évalué en tenant compte de différents paramètres tels que la facilité du démoulage (force de cohésion du moule sur la plaque), l'aspect des plaques: bulles, taches.
Une note comprise entre 0 et 10 (10 = démoulage parfait : facile et plaque lisse et non tachée) est alors donnée à chaque essai.

**4) Produits testés**

-   essai 1 : témoin non traité.
-   essai 2 : agent de démoulage du commerce vendu sous la dénomination ESTOROB 804-01® par la société NOVANCE, FRANCE.
-   essais selon l'invention :

    *   essai 3 : résine A (préparée à l'exemple 2)
        Résine notée DTOR avec R = $C_2H_5$ ;
    *   essai 4 : 50 % résine A + 50 % ESTOROB 804-01®

## 5) **Résultats**

Les résultats sont rassemblés dans le tableau ci dessous.

| Essai N° | Absorption d'eau après 4 heures | Démoulage /10 |
|----------|--------------------------------|---------------|
| 1 | 5 ml | 5 |
| 2 | 4 ml | 9 |
| 3 | 0.05 ml | 8 |
| 4 | 0.05 ml | 9 |

## 6) **Conclusions**

Le produit du commerce donne un démoulage satisfaisant mais n'apporte pas de propriété hydrofuge.
Les produits selon l'invention (essais 3 et 4) ont de bonnes propriétés de démoulage ainsi qu'un pouvoir hydrofuge excellent.

## **Revendications**

1. Procédé de moulage et hydrofugation simultanés d'éléments moulés en béton, mortier, ciment ou analogue, caractérisé en ce que, avant de couler le béton, ciment ou analogue, on recouvre l'intérieur du moule d'une composition comprenant une résine qui est un copolymère silicone de formule (I) suivante :

$$\mathbf{M}_\alpha \mathbf{D}_\beta \, \mathbf{T}_\gamma \mathbf{Q}_\delta \mathbf{(OR)}_\varepsilon \qquad \mathbf{(I)}$$

où :

- $M = R^1R^2R^3SiO1/2$
  $D = R^4R^5SiO2/2$
  $T = R^6SiO3/2$
  $Q = SiO4/2$
- $R^1$, $R^2$, $R^3$, $R^4$, $R^5$ et $R^6$, identiques ou différents entre eux, représentent chacun un reste hydrocarboné en $C_1$-$C_{12}$ ;
- R : atome d'hydrogène ou radical alkyle linéaire ou ramifié, en $C_1$-$C_4$ ;
- le copolymère présente dans sa structure au moins un motif T ou Q ;
- les symboles $\alpha$, $\beta$, $\gamma$, $\delta$ représentent les fractions molaires (ou la proportion en nombre) des atomes de silicium respectivement de types M, D, T et Q pour un atome de silicium ; le symbole représente la fraction molaire (ou la proportion en nombre) des extrémités $\equiv$SiOR par atome de silicium ; ces symboles variant dans les intervalles suivants :

  $\alpha$ : 0 - 0,5
  $\beta$ : 0 - 0,95
  $\gamma$ : 0 - 0,9
  $\delta$ : 0 - 0,8
  $\varepsilon$ : 0,05 - 2

  avec $\alpha + \beta + \gamma + \delta = 1$
  en l'absence de réticulant de type silane hydrolysable et de catalyseur de durcissement dans la composition.

2. Procédé selon la revendication 1, caractérisé en ce que la résine est un copolymère de formule (I) où :

- $R^1$ à $R^6$ :identiques ou différents entre eux, représentent chacun un radical alkyle, linéaire ou ramifié, en $C_1$-$C_8$ ;
- le copolymère présente dans sa structure au moins un motif T, le symbole $\gamma$ étant alors un nombre différent de zéro;

- au moins 25 % en nombre de l'un ou plusieurs des substituants $R^1$ à $R^6$ représentent un radical alkyle, linéaire ou ramifié, en $C_3$-$C_8$.

3. Procédé selon la revendication 1, caractérisé en ce que le copolymère est de type :

$$D_\beta T_\gamma (OR)_\varepsilon$$

où :

- $R^4$ à $R^6$ identiques ou différents entre eux, représentent chacun un radical alkyle, linéaire ou ramifié, en $C_1$-$C_8$ ;
- au moins 25 % en nombre de l'un ou plusieurs des substituants $R^4$ à $R^6$ représentent un radical alkyle, linéaire ou ramifié, en $C_3$-$C_8$ ;
- $\beta$ : 0,2 - 0,9
  $\gamma$ : 0,1 - 0,8
  $\varepsilon$ : 0,2 - 1,5.

4. Procédé selon la revendication 1, caractérisé en ce que le copolymère est de type :

$$D_\beta T_\gamma (OR)_\varepsilon$$

où :

- $R^4$ et $R^5$ identiques ou différents entre eux, représentent chacun un radical alkyle, linéaire ou ramifié, en $C_1$-$C_2$ ;
- $R^6$ identiques ou différents entre eux, représentent chacun un radical alkyle, linéaire ou ramifié, en $C_3$-$C_8$ ;
- R atome d'hydrogène ou alkyle linéaire en $C_1$-$C_3$ ;
- $\beta$ : 0,2 - 0,6
  $\gamma$ : 0,4 - 0,8
  $\varepsilon$ : 0,3 - 1,0.

5. Procédé selon l'une quelconque des revendications 1 à 4, caractérisé en ce que les radicaux $R^1$ à $R^6$ sont choisis parmi le groupe consistant en : un radical alkyle linéaire ou ramifié, pris dans le groupe formé par un radical méthyle, éthyle, propyle, butyle, isobutyle ; un radical vinyle ; un radical phényle ou naphtyle ; un radical arylalkyle de type benzyle ou phényléthyle, alkylaryle de type tolyle, xylyle ; et radical araryle de type biphénylyle.

6. Procédé selon l'une quelconque des revendications 1 à 5, caractérisé en ce que la composition comprend, en outre, un ou plusieurs modificateurs de la tension de surface.

7. Procédé selon la revendication 6, caractérisé en ce que la composition comprend une ou des huiles polydiorganosiloxanes réactives ou non réactives.

8. Procédé selon la revendication 7, caractérisé en ce que la composition comprend une ou plusieurs huiles polydiméthylsiloxanes $\alpha,\omega$-triméthylsilyles de viscosité comprise entre 10 et 10 000 mPa.s.

9. Procédé selon la revendication 7, caractérisé en ce que la composition comprend une ou plusieurs huiles polydiméthylsiloxanes $\alpha,\omega$-dihydroxylées de viscosité comprise entre 10 et 10 000 mPa.s.

10. Procédé selon l'une quelconque des revendications 7 à 9, caractérisé en ce que les huiles sont présentes à raison de 1 à 80 % en poids par rapport à l'ensemble résine silicone (I) + huile.

11. Procédé selon la revendication 10, caractérisé en ce que les huiles sont présentes à raison de 1 à 60 % en poids.

12. Procédé selon la revendication 6, caractérisé en ce que la composition comprend un ou plusieurs copolymères silicone-polyéther issus de la réaction d'un polyéther de formule :

$$CH_2=CH-CH_2-[OCH_2CH_2]_v-[OCH_2CH(CH_3)]_w-OH$$

sur une huile silicone de formule :

$$Me_3SiO(Me_2SiO)_x(MeHSiO)_ySiMe_3, \ Me = méthyle$$

avec v et w différents de 0 et notamment compris entre 5 et 30
avec x allant de 20 à 150
avec y allant de 2 à 10 ;

en présence éventuellement d'un additif polyéther libre.

**13.** Procédé selon la revendication 12, caractérisé en ce que le copolymère est présent à raison de 0,1 à 10 % en poids par rapport à l'ensemble résine silicone (I) + copolymère.

**14.** Procédé selon la revendication 13, caractérisé en ce que le copolymère est présent à raison de 0,5 à 5 % en poids.

**15.** Procédé selon la revendication 6, caractérisé en ce que la composition comprend, en outre, un ou plusieurs agents de démoulage.

**16.** Procédé selon la revendication 15, caractérisé en ce que l'agent de démoulage est présent à raison de 1 à 80 % en poids par rapport à l'ensemble résine silicone (I) + agent de démoulage.

**17.** Procédé selon la revendication 16, caractérisé en ce que l'agent de démoulage est présent à raison de 1 à 60 % en poids.

**18.** Procédé selon l'une quelconque des revendications 1 à 17, caractérisé en ce que l'on applique la composition sur le moule à raison de 5 à 30 g/m$^2$.

**19.** Procédé selon la revendication 18, caractérisé en ce que l'on applique la composition sur le moule à raison de 15 à 25 g/m$^2$.

**20.** Elément moulé en béton, mortier, ciment ou analogue, susceptible d'être obtenu par la mise en oeuvre du procédé selon l'une quelconque des revendications 1 à 19.

**21.** Composition de démoulage et d'hydrofugation comprenant au moins une résine qui est un copolymère de formule (I) tel que défini à l'une quelconque des revendications 1 à 5 et au moins un modificateur de tension de surface pris dans le groupe formé par une huile non réactive, une huile réactive, un copolymère et un agent de démoulage.

**Patentansprüche**

**1.** Verfahren zur gleichzeitigen Formung und Hydrophobierung von aus Beton, Mörtel, Zement oder analogen Materialien geformten Elementen, dadurch gekennzeichnet, daß man vor dem Gießen des Betons, Zements oder analogen Materials das Innere der Form mit einer Zusammensetzung überzieht, die ein Harz umfaßt, das ein Siliconcopolymer der folgenden Formel (I) ist:

$$M_\alpha D_\beta T_\gamma Q_\delta (OR)_\varepsilon \tag{I},$$

worin:

- M = R$^1$R$^2$R$^3$SiO1/2
  D = R$^4$R$^5$SiO2/2
  T = R$^6$SiO3/2

Q = SiO4/2,

- R$^1$, R$^2$, R$^3$, R$^4$, R$^5$ und R$^6$, die gleich oder voneinander verschieden sind, jeweils für einen C$_1$-C$_{12}$-kohlenwasserstoffhaltigen Rest stehen,
- R: Wasserstoffatom oder linearer oder verzweigter C$_1$-C$_4$-Alkylrest;
- das Copolymer in seiner Struktur mindestens ein Motiv T oder Q aufweist;
- die Symbole α, β, γ, δ für die Molenbrüche (oder den zahlenmäßigen Anteil) der Siliciumatome jeweils der Typen M, D, T und Q bezogen auf ein Siliciumatom stehen; das Symbol ε für den Molenbruch (oder den zahlenmäßigen Anteil) der Enden ≡SiOR pro Siliciumatom steht; wobei diese Symbole innerhalb der folgenden Intervalle variieren:

> α: 0 - 0,5
> β: 0 - 0,95
> γ: 0 - 0,9
> δ: 0 - 0,8
> ε: 0,05 - 2

wobei α + β + γ + δ = 1;

in Abwesenheit von Vernetzungsmittel vom Typ hydrolysierbares Silan und von Härtungskatalysator in der Zusammensetzung.

2. Verfahren nach Anspruch 1, dadurch gekennzeichnet, daß das Harz ein Copolymer der Formel (I) ist, worin:

- R$^1$ bis R$^6$, die gleich oder voneinander verschieden sind, jeweils für einen linearen oder verzweigten C$_1$-C$_8$-Alkylrest stehen,
- das Copolymer in seiner Struktur mindestens ein Motiv T aufweist, wobei das Symbol γ dann eine von Null verschiedene Zahl ist,
- mindestens 25%, bezogen auf die Anzahl, des einen oder mehrerer der Substituenten R$^1$ bis R$^6$ für einen linearen oder verzweigten C$_3$-C$_8$-Alkylrest stehen.

3. Verfahren nach Anspruch 1, dadurch gekennzeichnet, daß das Copolymer vom Typ:

$$D_\beta T_\gamma(OR)_\varepsilon,$$

ist, worin:

- R$^4$ bis R$^6$, die gleich oder voneinander verschieden sind, jeweils für einen linearen oder verzweigten C$_1$-C$_8$-Alkylrest stehen,
- mindestens 25%, bezogen auf die Anzahl, des einen oder mehrerer der Substituenten R$^4$ bis R$^6$ für einen linearen oder verzweigten C$_3$-C$_8$-Alkylrest stehen,
- β: 0,2 - 0,9
- γ: 0,1 - 0,8
- ε: 0,2 - 1,5.

4. Verfahren nach Anspruch 1, dadurch gekennzeichnet, daß das Copolymer vom Typ:

$$D_\beta T_\gamma(OR)_\varepsilon,$$

ist, worin:

- R$^4$ und R$^5$, die gleich oder voneinander verschieden sind, jeweils für einen linearen oder verzweigten C$_1$-C$_2$-Alkylrest stehen,
- R$^6$, die gleich oder voneinander verschieden sind, jeweils für einen linearen oder verzweigten C$_3$-C$_8$-Alkylrest stehen;
- R: Wasserstoffatom oder linearer C$_1$-C$_3$-Alkylrest;

- β: 0,2 - 0,6
- γ: 0,4 - 0,8
- ε: 0,3 - 1,0.

5. Verfahren nach einem der Ansprüche 1 bis 4, dadurch gekennzeichnet, daß die Reste R[1] bis R[6] ausgewählt sind aus der Gruppe, bestehend aus: einem linearen oder verzweigten Alkylrest, entnommen aus der Gruppe, gebildet aus einem Methyl-, Ethyl-, Propyl-, Butyl-, Isobutylrest; einem Vinylrest; einem Phenyl- oder Naphthylrest, einem Arylalkylrest vom Typ Benzyl oder Phenylethyl, Alkylaryl vom Typ Tolyl, Xylyl und einem Ararylrest vom Typ Biphenylyl.

6. Verfahren nach einem der Ansprüche 1 bis 5, dadurch gekennzeichnet, daß die Zusammensetzung außerdem ein oder mehrere Grenzflächenspannungsmodifizierungsmittel umfaßt.

7. Verfahren nach Anspruch 6, dadurch gekennzeichnet, daß die Zusammensetzung ein oder mehrere reaktive oder nicht-reaktive Polydiorganosiloxanöle umfaßt.

8. Verfahren nach Anspruch 7, dadurch gekennzeichnet, daß die Zusammensetzung ein oder mehrere $\alpha,\omega$-trimethylsilylierte Polydimethylsiloxanöle mit einer Viskosität zwischen 10 und 10000 mPa·s umfaßt.

9. Verfahren nach Anspruch 7, dadurch gekennzeichnet, daß die Zusammensetzung ein oder mehrere $\alpha,\omega$-dihydroxylierte Polydimethylsiloxanöle mit einer Viskosität zwischen 10 und 10000 mPa·s umfaßt.

10. Verfahren nach einem der Ansprüche 7 bis 9, dadurch gekennzeichnet, daß die Öle in einer Menge von 1 bis 80 Gew.-% bezogen auf die Gesamtheit aus Siliconharz (I) + Öl vorhanden sind.

11. Verfahren nach Anspruch 10, dadurch gekennzeichnet, daß die Ole in einer Menge von 1 bis 60 Gew.-% vorhanden sind.

12. Verfahren nach Anspruch 6, dadurch gekennzeichnet, daß die Zusammensetzung ein oder mehrere Silicon-Polyether-Copolymere umfaßt, stammend aus der Umsetzung eines Polyethers der Formel

$$CH_2=CH-CH_2-[OCH_2CH_2]_v-[OCH_2CH(CH_3)]_w-OH$$

mit einem Siliconöl der Formel:

$$Me_3SiO(Me_2SiO)_x(MeHSiO)_ySiMe_3; \quad Me = Methyl,$$

wobei v und w von 0 verschieden sind und insbesondere zwischen 5 und 30 sind,
wobei x von 20 bis 150 geht,
wobei y von 2 bis 10 geht,

gegebenenfalls in Gegenwart eines freien Polyether-Zusatzstoffs.

13. Verfahren nach Anspruch 12, dadurch gekennzeichnet, daß das Copolymer in einer Menge von 0,1 bis 10 Gew.-% bezogen auf die Gesamtheit aus Siliconharz (I) + Copolymer vorhanden ist.

14. Verfahren nach Anspruch 13, dadurch gekennzeichnet, daß das Copolymer in einer Menge von 0,5 bis 5 Gew.-% vorhanden ist.

15. Verfahren nach Anspruch 6, dadurch gekennzeichnet, daß die Zusammensetzung außerdem ein oder mehrere Formtrennmittel umfaßt.

16. Verfahren nach Anspruch 15, dadurch gekennzeichnet, daß das Formtrennmittel in einer Menge von 1 bis 80 Gew.-% bezogen auf die Gesamtheit aus Siliconharz (I) + Formtrennmittel vorhanden ist.

17. Verfahren nach Anspruch 16, dadurch gekennzeichnet, daß das Formtrennmittel in einer Menge von 1 bis 60 Gew.-% vorhanden ist.

18. Verfahren nach einem der Ansprüche 1 bis 17, dadurch gekennzeichnet, daß man die Zusammensetzung auf die Form in einer Menge von 5 bis 30 g/m$^2$ aufbringt.

19. Verfahren nach Anspruch 18, dadurch gekennzeichnet, daß man die Zusammensetzung auf die Form in einer Menge von 15 bis 25 g/m$^2$ aufbringt.

20. Aus Beton, Mörtel, Zement oder einem analogen Material geformtes Element, das durch Ausführen des Verfahrens nach einem der Ansprüche 1 bis 19 erhalten werden kann.

21. Entformungs- und Hydrophobierungszusammensetzung, umfassend mindestens ein Harz, das ein Copolymer der Formel (I) ist, wie es in einem der Ansprüche 1 bis 5 definiert worden ist, und mindestens ein Grenzflächenspannungsmodifizierungsmittel, entnommen aus der Gruppe, gebildet aus einem nicht-reaktiven Öl, einem reaktiven Öl, einem Copolymer und einem Formtrennmittel.

**Claims**

1. Process for simultaneously moulding and rendering water-repellent moulded components made of concrete, mortar, cement or the like, characterized in that, before pouring the concrete, mortar, cement or the like, the interior of the mould is covered with a composition comprising a resin which is a silicone copolymer of following formula (I) :

$$M_\alpha D_\beta T_\gamma Q_\delta (OR)_\varepsilon \qquad (I)$$

where:

- M = $R^1 R^2 R^3 SiO_{1/2}$
  D = $R^4 R^5 SiO_{2/2}$
  T = $R^6 SiO_{3/2}$
  Q = $SiO_{4/2}$
- $R^1$, $R^2$, $R^3$, $R^4$, $R^5$ and $R^6$, which are identical to or different from one another, each represent a $C_1$-$C_{12}$ hydrocarbon-comprising residue;
- R is a hydrogen atom or a linear or branched $C_1$-$C_4$ alkyl radical;
- the copolymer exhibits, in its structure, at least one T or Q unit;
- the $\alpha$, $\beta$, $\gamma$ and $\delta$ symbols represent the molar fractions (or the proportion by number) of the silicon atoms respectively of M, D, T and Q types for one silicon atom; the $\varepsilon$ symbol represents the molar fraction (or the proportion by number) of the $\equiv$SiOR ends per silicon atom; these symbols varying within the following ranges:

  $\alpha$ : 0-0.5
  $\beta$ : 0-0.95
  $\gamma$ : 0-0.9
  $\delta$ : 0-0.8
  $\varepsilon$ : 0.05-2

with $\alpha + \beta + \gamma + \delta = 1$
in the absence of crosslinking agent of hydrolysable silane type and of curing catalyst in the composition.

2. Process according to claim 1, characterized in that the resin is a copolymer of formula (I) where:

- $R^1$ to $R^6$, which are identical to or different from one another, each represent a linear or branched $C_1$-$C_8$ alkyl radical;
- the copolymer exhibits, in its structure, at least one T unit, the y symbol then being a number other than zero;
- at least 25% by number of one or more of the $R^1$ to $R^6$ substituents represent a linear or branched $C_3$-$C_8$ alkyl radical.

**3.** Process according to claim 1, characterized in that the copolymer is of type:

$$D_\beta T_\gamma (OR)_\varepsilon$$

where:

- $R^4$ to $R^6$, which are identical to or different from one another, each represent a linear or branched $C_1$-$C_8$ alkyl radical;
- at least 25% by number of one or more of the $R^4$ to $R^6$ substituents represent a linear or branched $C_3$-$C_8$ alkyl radical;
- $\beta$ : 0.2-0.9
  $\gamma$ : 0.1-0.8
  $\varepsilon$ : 0.2-1.5.

**4.** Process according to claim 1, characterized in that the copolymer is of type:

$$D_\beta T_\gamma (OR)_\varepsilon$$

where:

- $R^4$ and $R^5$, which are identical to or different from one another, each represent a linear or branched $C_1$-$C_2$ alkyl radical;
- $R^6$, which are identical to or different from one another, each represent a linear or branched $C_3$-$C_8$ alkyl radical;
- R is a hydrogen atom or a linear $C_1$-$C_3$ alkyl radical;
- $\beta$ : 0.2-0.6
  $\gamma$ : 0.4-0.8
  $\varepsilon$ : 0.3-1.0.

**5.** Process according to any one of claims 1 to 4, characterized in that the $R^1$ to $R^6$ radicals are chosen from the group consisting of: a linear or branched alkyl radical taken from the group formed by a methyl, ethyl, propyl, butyl or isobutyl radical; a vinyl radical; a phenyl or naphthyl radical; an arylalkyl radical of benzyl or phenylethyl type; an alkylaryl radical of tolyl or xylyl type; and an araryl radical of biphenylyl type.

**6.** Process according to any one of claims 1 to 5, characterized in that the composition additionally comprises one or more surface-tension modifiers.

**7.** Process according to claim 6, characterized in that the composition comprises one or more reactive or unreactive polydiorganosiloxane oils.

**8.** Process according to claim 7, characterized in that the composition comprises one or more $\alpha,\omega$-trimethylsilyl poly-dimethylsiloxane oils with a viscosity of between 10 and 10,000 mPa.s.

**9.** Process according to claim 7, characterized in that the composition comprises one or more $\alpha,\omega$-dihydroxylated polydimethylsiloxane oils with a viscosity of between 10 and 10,000 mPa.s.

**10.** Process according to any one of claims 7 to 9, characterized in that the oils are present in a proportion of 1 to 80% by weight with respect to the silicone resin (I) + oil combination.

**11.** Process according to claim 10, characterized in that the oils are present in a proportion of 1 to 60% by weight.

**12.** Process according to claim 6, characterized in that the composition comprises one or more silicone-polyether copolymers resulting from the reaction of a polyether of formula:

$$CH_2=CH-CH_2-[OCH_2CH_2]_v-[OCH_2CH(CH_3)]_w-OH$$

with a silicone oil of formula:

$$Me_3SiO(Me_2SiO)_x(MeHSiO)_ySiMe_3, \ Me = methyl$$

with v and w other than 0 and in particular between 5 and 30
with x ranging from 20 to 150
with y ranging from 2 to 10;

optionally in the presence of a free polyether additive.

13. Process according to claim 12, characterized in that the copolymer is present in a proportion of 0.1 to 10% by weight with respect to the silicone resin (I) + copolymer combination.

14. Process according to claim 13, characterized in that the copolymer is present in a proportion of 0.5 to 5% by weight.

15. Process according to claim 6, characterized in that the composition additionally comprises one or more mould-release agents.

16. Process according to claim 15, characterized in that the mould-release agent is present in a proportion of 1 to 80% by weight with respect to the silicone resin (I) + mould-release agent combination.

17. Process according to claim 16, characterized in that the mould-release agent is present in a proportion of 1 to 60% by weight.

18. Process according to any one of claims 1 to 17, characterized in that the composition is applied to the mould in a proportion of 5 to 30 g/m$^2$.

19. Process according to claim 18, characterized in that the composition is applied to the mould in a proportion of 15 to 25 g/m$^2$.

20. Moulded component made of concrete, mortar, cement or the like which can be obtained by the implementation of the process according to any one of claims 1 to 19.

21. Composition for removing from the mould and rendering water-repellent comprising at least one resin which is a copolymer of formula (I) as defined in any one of claims 1 to 5 and at least one surface-tension modifier taken from the group formed by an unreactive oil, a reactive oil, a copolymer and a mould-release agent.